# EUROPÄISCHE PATENTANMELDUNG

(11) **EP 1 136 253 A2**
(43) Veröffentlichungstag der Anmeldung: **26.09.2001**
(21) Anmeldenummer: 01100413.2
(22) Anmeldetag: 08.01.2001
(51) Int. Cl.: B32B 31/14, B32B 15/08, C09J 5/06

(54) **Verfahren zum Herstellen eines Doppellagenbleches und eines daraus geformten, insbesondere einbrennlackierten Formbauteils sowie ein tiefziehfähiges Doppellagenblech**

(30) Priorität: 23.03.2000 DE 10014017
(71) Anmelder: Thyssen Krupp Stahl AG, 40211 Düsseldorf (DE)
(72) Erfinder: Hartmann, Gerd, Dr., 47495 Rheinberg (DE); Flehmig, Thomas Dr. Ing., 40885 Ratingen (DE); Nazikkol, Catin Dr. rer. nat., 47169 Duisburg (DE); Behr, Friedrich Prof. Dr., 52072 Aachen (DE)
(74) Vertreter: Knauf, Rudolf, Dipl.-Ing.

(57) **Zusammenfassung**

Die Erfindung betrifft ein Herstellungsverfahren für ein Doppellagenblech insbesondere eines lackierten Formbauteils aus einem solchen Doppellagenblech zum Beispiel für die Außenhaut eines Kraftfahrzeuges mit einer an den beiden glatten Deckblechen (7,10) angeklebten Zwischenlage (6) aus Epoxidharz. Nach Einbringen der Zwischenlage (6) und von über die Fläche verteilten Spots (16) aus einem Epoxidharz, das bei einer niedrigeren Temperatur als das Epoxidharz der Zwischenlage (6) polymerisiert, zwischen die Deckbleche (7,10) werden durch Polymerisation des Epoxidharzes der Spots (16) die Deckbleche (7,10) räumlich zueinander fixiert. Anschließend findet die Umformung des so erhaltenen Verbundes statt. Abschließend wird das erhaltene Formbauteil (15) lackiert und beim Lackeinbrennen das Epoxidharz der Zwischenlage (6) polymerisiert.

## Beschreibung

Die Erfindung bezieht sich auf ein Verfahren zum Herstellen eines Doppellagenbleches mit einer mit dessen Deckblechen verklebten Zwischenlage aus einem Epoxidharz in Form eines Hotmelts.

Aus solchen Doppellagenblechen werden zum Beispiel Formbauteile geformt, die im Karosseriebau von Kraftfahrzeugen eingesetzt werden können. Deshalb sollen sie ein möglichst geringes Flächengewicht bei einer hohen Beulsteifigkeit haben. Außerdem soll das Doppellagenblech gut umformbar, insbesondere gut tiefziehfähig, sein. Schließlich soll das Formbauteil bei der Lackierung, insbesondere einer kathodischen Tauchlackierung und einem anschließenden Einbrennen des Lackes, keine Probleme erzeugen.

Aus der US 4,594,292 A1 ist das Problem bekannt, daß bei einem Doppellagenblech mit einer Zwischenlage aus einem Harz, die mit den Deckblechen verklebt ist, die Klebeverbindung zwischen der Zwischenlage und den Deckblechen bei hohen Verformungen durch Ablösung aufgehoben wird. Um diesem unerwünschten Phänomen zu begegnen und gleichzeitig sicherzustellen, daß die Zwischenlage während der Umformung nicht so stark gegen die Deckbleche drückt, daß diese in ihren äußeren Bereichen rissig werden, ist vorgesehen, daß die Zwischenlage aus drei verschiedenen Harzschichten mit jeweils unterschiedlichen Eigenschaften besteht. Die Kernschicht weist ein plastisches Verhalten auf, während die äußeren Schichten aus einem duktilen Harz bestehen, das unter den auftretenden Umformbelastungen nicht fließt und somit nicht gegen die Deckbleche des Doppellagenbleches drückt. Auf diese Weise sollen extreme Umformungen bei Biegungen um bis zu 180° C erreicht werden, ohne daß die Zwischenlage sich von den Deckblechen ablöst und/oder Risse in den Deckblechen entstehen.

Formbauteile, die aus einem solchen Doppellagenblech hergestellt sind, sind allerdings nicht für das Einbrennlackieren geeignet, da die äußeren Schichten der Zwischenlage aus einer Mischung aus Polyäthylen und Polypropylen, also Thermoplasten bestehen, die bei Temperaturen von oberhalb 160° C flüssig werden. Beim Einbrennen des Lackes während einer Einbrennlackierung, die typischerweise bei Temperaturen von 180° C und darüber und über eine Zeitdauer von mindestens 30 Minuten erfolgt, würde eine solche Zwischenlage teilweise auslaufen und die für die Beulsteifigkeit des Formbauteils wichtige Klebeverbindung zwischen den Deckblechen und der Zwischenlage verloren gehen.

Ferner ist ein Doppellagenblech bekannt (EP 0 598 428 A1), bei dem eine Zwischenlage aus Polypropylen mit Klebstoff an den Deckblechen klebt. Ein solches Doppellagenblech soll für das Kaltumformen zu einem Formbauteil geeignet sein. Das Formbauteil soll nach einer Wärmebehandlung mit mindestens 135° C eine hohe Formstabilität haben. Da Polypropylen als Thermoplast bei Temperaturen oberhalb 160° C flüssig wird, gilt für ein solches Bauteil das gleiche wie bei dem vorigen Bauteil, nämlich, daß die Klebeverbindung zwischen den Deckblechen und der Zwischenlage bei einer Behandlungszeit von 30 Minuten mit einer Temperatur von mindestes 180° C, wie sie beim Lackeinbrennen üblich ist, verloren geht.

In einer älteren nicht vorveröffentlichten deutschen Patentanmeldung (198 46 533.5) wird ein Verfahren zum Herstellen eines einbrennlackierten Formbauteils aus einem Doppellagenblech beschrieben, bei dem die beiden Deckbleche über eine Zwischenlage aus einen Epoxidharz in Form eines Hotmelts miteinander verklebt sind. Bei diesem Verfahren werden die beiden Deckbleche nach Einbringen des Epoxidharzes räumlich zueinander fixiert, ohne daß dabei das eingesetzte Epoxidharz polymerisiert. Die räumliche Fixierung der beiden Deckbleche kann weiter dadurch verbessert werden, daß für ein Deckblech ein Noppenblech verwendet wird, das an seinen Noppenspitzen mit dem anderen Deckblech verschweißt wird. Die so räumlich zueinander fixierten Deckbleche mit der Zwischenlage werden anschließend zum Formbauteil verformt. Abschließend nach dem Tauchlackieren des umgeformten Bauteils erfolgt das Einbrennen des Lackes bei einer Temperatur, bei der auch das Epoxidharz der Zwischenlage polymerisiert und damit aushärtet. Bei einem solchen Verfahren ist zwar eine optimale Fixierung der Deckbleche dann gegeben, wenn über die Noppen die beiden Deckbleche miteinander verschweißt sind, doch hat ein solches Doppellagenblech den Nachteil, daß das ebene Deckblech wegen der sich abzeichnenden Schweißpunkte nicht glatt ist. Für die Außenhaut eines Kraftfahrzeuges ist ein solches Doppellagenblech deshalb nicht geeignet.

Der Erfindung liegt die Aufgabe zugrunde, ein Verfahren zum Herstellen eines Doppellagenbleches, insbesondere für einbrennlackierte Formbauteile, zu schaffen, dessen beide Deckbleche glatt sind, so daß es auch als Außenhaut eines Kraftfahrzeuges eingesetzt werden kann.

Diese Aufgabe wird bei der Erfindung dadurch gelöst, daß nach Einbringen der Zwischenlage aus einem Epoxidharz, das erst bei einer höheren Temperatur, insbesondere bei Lackeinbrenntemperaturen, polymerisiert (vernetzt) und aus über die Fläche verteilten Spots aus einem anderen Epoxidharz, das bei einer niedrigeren Temperatur als der Polymerisationstemperatur des Epoxidharzes der Zwischenlage polymerisiert und im polymerisierten Zustand noch beschränkt umformbar ist, zwischen die Deckbleche werden die Deckbleche mittels der sie kontaktierenden Spots durch Erwärmen ihres dabei polymerisierenden Epoxidharzes auf die niedrigere Temperatur zueinander räumlich fixiert.

Vorzugsweise wird das Doppellagenblech zu dem insbesondere einbrennlackierten Formbauteil durch folgende Schritte weiterverarbeitet:
a) Das Doppellagenblech wird mit den zueinander fixierten Deckblechen bei noch nicht polymerisiertem Epoxidharz der Zwischenlage zum Formbauteil umgeformt
   u n d
b) nach dem Umformen, insbesondere nach dem Lackieren des umgeformten Bauteils (15), wird das Bauteil (15) auf die höhere Temperatur, insbesondere auf die Lackeinbrenntemperatur, erwärmt, bei der die Polymerisation des Epoxidharzes der Zwischenlage (6,26,27), insbesondere gleichzeitig mit dem Einbrennen des Lackes, erfolgt.

Bei dem erfindungsgemäßen Verfahren wird durch die Wahl bestimmter Epoxidharze einerseits gewährleistet, daß die beiden Deckbleche eine gute räumliche Fixierung zueinander erhalten, und andererseits, daß bei der Umformung des Doppellagenbleches zum Formbauteil, insbesondere durch Tiefziehen, die großflächige Zwischenlage wegen ihres noch nicht vernetzten Epoxidharzes und die Spots wegen ihrer gegenüber der Fläche der Zwischenlage fast vernachlässigbaren Fläche und ihrer noch ausreichenden Verformbarkeit auch im polymerisierten Zustand die erforderlichen Verformungen mitmachen und die Deckbleche nicht unzulässig hoch belastet werden und/oder es zum Ablösen der Deckbleche von den Spots kommt. Wegen des flächenmäßig geringen Anteils der Spots und des eingestellten E-Moduls senkrecht zur Blechebene (Druckbelastung), der im polymerisierten Zustand im wesentlichen gleich dem E-Modul der noch nicht polymerisierten Zwischenlage in gleicher Richtung sein sollte, ist auch sichergestellt, daß sich die Spots im Gegensatz zu Noppen beim Umformen nicht durchdrücken. Die Deckbleche bleiben also glatt, was für die Außenhaut eines Kraftfahrzeuges absolut notwendig ist. Gleichzeitig ist aber auch sichergestellt, daß das Epoxidharz der Zwischenlage wegen seines zähen Zustands beim Umformen nicht zwischen den Deckblechen herausgedrückt wird. Ferner ist gewährleistet, daß das Epoxidharz bei den beim Einbrennen üblichen hohen und für eine längere Zeit einwirkenden Temperaturen aufschmilzt ohne auszulaufen und polymerisiert, wodurch erst die endgültige, vollflächige, feste Verklebung der Deckbleche mit der Zwischenlage eintritt und das Formbauteil nach Erkalten des Epoxidharzes seine optimale Beulsteifigkeit erhält.

Es versteht sich, daß die Erfindung nicht auf die beschriebenen Epoxidharze beschränkt ist, sondern daß auch andere Stoffe mit ähnlichem Verhalten für die Erfindung geeignet sind. Bei solchen Stoffen ist wichtig, daß sie beim Umformprozeß die in der Regel verzinkten Deckbleche fixieren, ohne abzureißen, was eine gewisse Flexibilität voraussetzt. Sie sollten eine Aushärtetemperatur von ca. 25° C bis 150° C und eine Aushärtezeit haben, die kleiner ist als beim Durchlauf durch einen Ofen die Durchlaufzeit. Schließlich sollten die Spots im ausgehärteten Zustand im wesentlichen die gleiche Drucksteifigkeit wie die Zwischenlage im noch nicht ausgehärteten Zustand haben. So sind beispielsweise als Stoffe für die Spots flexibilisierte Epoxidharz-Klebstoffe, Polyurethan-Klebstoffe und Kautschuk-Klebstoffe geeignet.

Das Einbringen der Zwischenlage und der Spots kann auf verschiedene Art und Weise erfolgen.

Nach einer ersten Alternative wird die Zwischenlage vor dem Einbringen der Spots mit passenden Aufnahmeräumen versehen. Dies kann in der Weise geschehen, daß als Zwischenlage eine gelochte Folie verwendet wird, die noch nicht polymerisiert ist.

Für die Spots können unterschiedliche Epoxidharze verwendet werden. Bei einem unter Wärmeeinwirkung nicht aufschäumenden Epoxidharz werden die Aufnahmeräume aufgefüllt. Bei einem durch Erwärmen aufschäumenden Epoxidharz werden sie dagegen nur teilweise aufgefüllt. In jedem Fall kann sichergestellt werden, daß beim Fügen der Deckbleche und der Zwischenlage das Epoxidharz der Spots beide Deckbleche kontaktiert, so daß es nach dem Erwärmen zu der gewünschten räumlichen Fixierung der Deckbleche kommt.

Nach einer zweiten Alternative wird die Zwischenlage vollflächig zwischen die Deckbleche vorzugsweise im Coilcoatingverfahren eingebracht. Dabei werden die als einigermaßen druckfeste Körper ausgebildeten Spots eingestreut. Die Kontaktierung der Spots mit den Deckblechen erfolgt insbesondere dadurch, daß beim Einbringen der Zwischenlage und der Spots zwischen die Deckbleche und anschließendem Fügen die Spots aufgrund ihrer höheren Druckfestigkeit durch die Zwischenlage bis zur Kontaktierung der Deckbleche gedrückt werden.

Die Fixierung der Deckbleche über die Spots durch Polymerisation ihres Epoxidharzes kann auf verschiedene Art und Weise erfolgen. Sowohl im Durchlauf als auch stationär eignet sich eine induktive Erwärmung. Zur stationären Erwärmung eignet sich ferner eine die Deckbleche berührende Heizpresse. Im Durchlauf kann die Erwärmung auch mittels beheizter Rollen erfolgen.

Gegenstand der Erfindung ist ferner ein tiefziehfähiges Doppellagenblech mit zwei Deckblechen aus Metall und einer zwischen den Deckblechen angeordneten Zwischenlage aus Epoxidharz, insbesondere zur Verwendung in einem Verfahren der beschriebenen Art. Bei einem solchen Doppellagenblech sind in der Zwischenlage über deren Fläche verteilt an den Deckblechen klebende und sie räumlich zueinander fixierende Spots eingebettet, die aus einem polymerisierten Epoxidharz bestehen, dessen Polymerisationstemperatur unter der Polymerisationstemperatur des Epoxidharzes der Zwischenlage liegt.

Bei einem solchen Doppellagenblech kann das beim späteren Einsatz stärkeren Belastungen ausgesetzte Deckblech stärker, insbesondere dicker als das andere Deckblech dimensioniert sein. So läßt sich ein gewichtsoptimiertes Bauteil herstellen.

Im folgenden wird die Erfindung anhand einer Zeichnung näher erläutert. Im einzelnen zeigen:
- Fig. 1: den Herstellungsprozeß eines einbrennlackierten Formbauteils von der Phase der Herstellung eines Doppellagenbleches bis zur Phase der Einbrennlackierung,
- Fig. 2: die Phasen V bis VII des Herstellungsprozesses gemäß Fig. 1
**und**
- Fig. 3: ein Verfahren zum Einbringen einer Zwischenlage und Spots zwischen Bändern als Deckblechen in einer zu den Phasen I bis VII des Herstellungsprozesses gemäß Fig. 1 anderen Art und Weise.

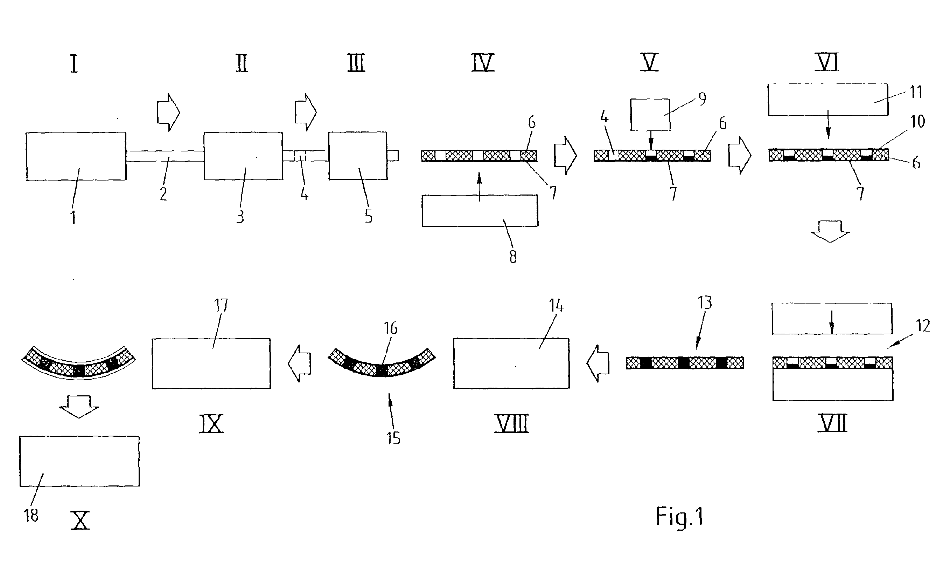

Beim Herstellungsprozeß nach Fig. 1 wird von einem Extruder 1 für eine Zwischenlage eine Folie 2 aus einem noch nicht polymerisierten Epoxidharz hergestellt (Phase I). Diese Folie 2 durchläuft einen Lochapparat 3, der über die Fläche verteilt in der Folie 2 Aufnahmeräume 4 für Spots aus einem anderen Epoxidharz als das der für die Zwischenlage bestimmten Folie 2 erzeugt (Phase II). Nach dem Lochapparat 3 durchläuft die Folie 2 eine Schere 5, die die Folie 2 auf das Format von Zwischenlagen 6 ablängt (Phase III).

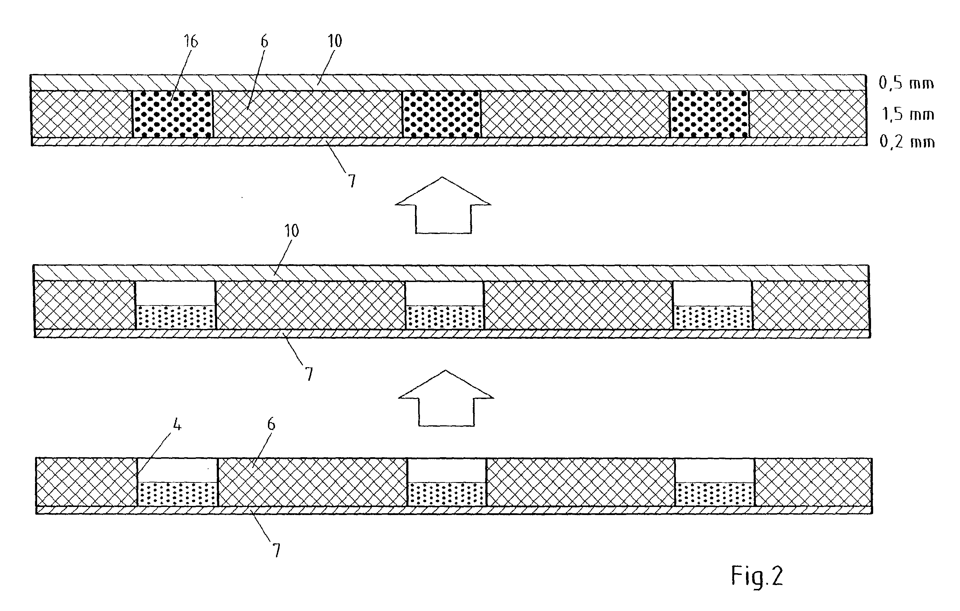

Die Zwischenlage 6 wird auf ein als Flachblech ausgebildetes Deckblech 7 abgelegt, das von einem Blechstapel 8 zugeführt wird (Phase IV). Dann werden die Aufnahmeräume 4 aus einem Dosierapparat 9 mit Epoxidharz für die Spots gefüllt (Phase V in Fig. 1 und unteres Bild in Fig. 2). Während das Epoxidharz der Folie 2 bei Lackeinbrenntemperaturen von üblicherweise über 160° C polymerisiert, liegt die Polymerationstemperatur für das Epoxidharz der Spots darunter, aber über 70° C, bei der aber schon das Epoxidharz der Folie 2 klebfähig wird. Beim Ausführungsbeispiel der Fig. 2 werden die Aufnahmeräume 4 mit einem unter Wärme aufschäumenden, vorzugsweise tixotrop eingestellten Epoxidharz teilweise aufgefüllt.

Nach Befüllen der Aufnahmeräume 4 wird ein als Flachblech ausgebildetes Deckblech 10 aufgelegt, das von einem Blechstapel 11 zugeführt wird (Phase VI in Fig. 1 und mittleres Bild in Fig. 2). Dieser so zusammengestellte Verbund aus den beiden Deckblechen 7,10 und der dazwischen eingebrachten Zwischenlage 6 mit dem in den Aufnahmeräumen 4 befindlichen Epoxidharz gelangt dann in eine Heizpresse 12 (Phase VII in Fig. 1 und oberes Bild in Fig. 2). Unter gleichzeitiger Anwendung von Wärme und Druck findet eine Polymerisation des Epoxidharzes in den Aufnahmeräumen 4 gegebenenfalls unter Aufschäumen statt, so daß dieses Epoxidharz beide Deckbleche 7,10 kontaktiert und daran anklebt, während das Epoxidharz der Zwischenlage 6 zwar auch an die Deckbleche anklebt aber nicht polymerisiert. Nach Abkühlen und Aushärten bildet das Epoxidharz in den Aufnahmeräumen 4 die beiden Deckbleche 7,10 räumlich zueinander fixierende Spots.

Das auf diese Art und Weise hergestellte Doppellagenblech 13 wird dann einer Tiefziehanlage 14 zugeführt und zum gewünschten Bauteil 15 umgeformt (Phase VIII). Beim Tiefziehen machen sich die aus polymerisiertem Epoxidharz bestehenden, über die Fläche verteilten und nur einen ganz geringen Flächenanteil ausmachenden, noch ausreichend verformbaren Spots 16 positiv in sofern bemerkbar, als sie die Deckbleche 7,10 räumlich zueinander fixieren, aber nicht dazu führen, daß es an den Verbindungsstellen zu Druckmarken in den Deckblechen kommt. Deshalb ist ein derart umgeformtes Bauteil 15 auch als Außenhaut eines Kraftfahrzeuges verwendbar.

Das so umgeformte Bauteil 15 gelangt dann in eine Lackieranlage 17, insbesondere in ein KTL Tauchbad (Phase IX). Anschließend wird es einem Brennofen 18 zugeführt, in dem der Lack eingebrannt wird und gleichzeitig das bis dahin noch nicht polymerisierte Epoxidharz der Zwischenlage 6 polymerisiert wird (Phase X). Das Ergebnis ist ein als Außenhaut eines Kraftfahrzeuges geeignetes lackiertes Formbauteil, das bei geringem Gewicht eine hohe Beulsteifigkeit hat.

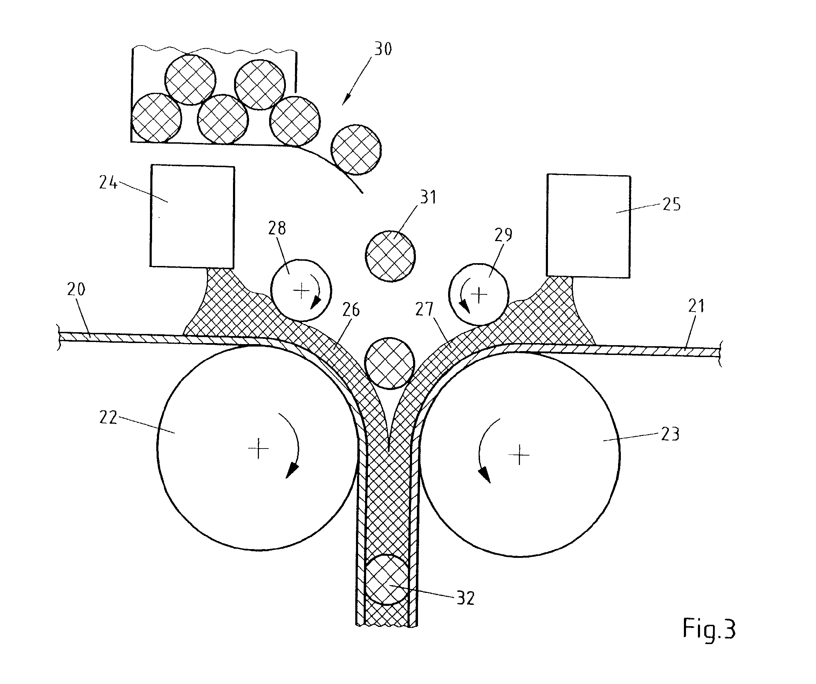

Das Ausführungsbeispiel der Fig. 3 unterscheidet sich von dem der Fig. 1 im wesentlichen darin, wie die Zwischenlage und die Spots zwischen die Deckbleche eingebracht werden. Dazu werden zwei Deckbleche 20,21 in Bandform über zwei beheizte Rollen 22,23 geführt. Für die Zwischenlage werden etwa im Scheitel dieser Rollen 22,23 mit Auftragsapparaten 24,25 Schichten 26,27 aus Epoxidharz aufgebracht. Die Dicke dieser Schichten 26,27 wird mittels Rakel 28,29 eingestellt. In den Zwickel der mit Epoxidharz beschichteten, bandförmigen Deckbleche 20, 21 werden mittels einer Schüttrinne 30 über die Breite der Deckbleche 20,21 verteilt Körper 31 aus Epoxidharz eingestreut. Diese Körper 31 sind druckfester als die Schichten 26,27 und haben eine Dicke, die mindestens gleich dem Abstand der Innenseiten der Deckbleche 20,21 im Spalt der Rollen 22,23 ist. Auf diese Art und Weise wird gewährleistet, daß sich die Körper 31 durch die Schichten 26,27 des weicheren Epoxidharzes durchdrücken und die Deckbleche 20,21 kontaktieren. Bei ausreichender Erwärmung polymerisiert das Epoxidharz der Körper 31 und klebt an den Innenseiten der Deckbleche 20,21 an, während das Epoxidharz der die Zwischenlage bildenden Schichten 26,27 aber noch nicht polymerisiert, die Schichten 26,27 sich aber verbinden. Nach Abkühlung fixieren dann die aus den Körpern 31 gebildeten, über die Fläche verteilten Spots 32 die Deckbleche 20,21 räumlich zueinander. Sofern anstelle von nicht aufschäumendem Epoxidharz für die Bildung der Spots 32 aufschäumendes Epoxidharz verwendet wird, kommt es auf den Durchmesser der Körper 31 weniger an. Im diesem Fall ist entscheidend, daß die durch das Aufschäumen bedingte Volumenvergrößerung ausreichend groß ist, um die Deckbleche 20,21 zu kontaktieren.

Das auf diese Art und Weise hergestellte Doppellagenblech kann dann abgelängt werden und entsprechend den Phasen VIII bis X der Fig. 1 zum einbrennlackierten Formbauteil weiterverarbeitet werden.

## Patentansprüche

1. Verfahren zum Herstellen aus einem Doppellagenbleches mit einer mit dessen Deckblechen (7,10, 20,21) verklebten Zwischenlage (6,26,27) aus einem Epoxidharz in Form eines Hotmelts,
**dadurch gekennzeichnet, daß** nach Einbringen der Zwischenlage (6,26,27) aus einem Epoxidharz, das erst bei einer höheren Temperatur, insbesondere Lackeinbrenntemperaturen, polymerisiert(vernetzt), und aus über die Fläche verteilten Spots (16,32) aus einem anderen Epoxidharz, das bei einer niedrigeren Temperatur als der Polymerisationstemperatur des Epoxidharzes der Zwischenlage (6,26,27) polymerisiert und im polymerisierten Zustand noch beschränkt verformbar ist, zwischen die Deckbleche (7,10,20,21), werden die Deckbleche (7,10,20,21) bei sie kontaktierenden Spots (16,32) durch Erwärmen ihres dabei polymerisierenden Epoxidharzes auf die niedrigere Temperatur zueinander räumlich fixiert:

2. Verfahren nach Anspruch 1 und Weiterverarbeitung zu einem insbesondere einbrennlackierten Formbauteil, **gekennzeichnet durch** folgende weiteren Schritte:
a) das Doppellagenblech mit den zueinander fixierten Deckblechen (7,10,20,21) wird bei noch nicht polymerisiertem Epoxidharz der Zwischenlage (6,26,27) zum Formbauteil (15) umgeformt,
u n d
b) nach dem Umformen, insbesondere nach dem Lackieren des umgeformten Bauteils (15), wird das Bauteil (15) auf die höhere Temperatur, insbesondere die Lackeinbrenntemperatur, erwärmt, bei der die Polymerisation des Epoxidharzes der übrigen Zwischenlage (6,26,27), insbesondere gleichzeitig mit dem Einbrennen des Lackes, erfolgt.

3. Verfahren nach Anspruch 1 oder 2,
**dadurch gekennzeichnet, daß** die Zwischenlage (6,26,27) vollflächig zwischen die Deckbleche (20,21), insbesondere im Coilcoatingverfahren, eingebracht wird und dabei für die Spots (32) kleine druckfeste Körper (31) aus Epoxidharz eingestreut werden.

4. Verfahren nach Anspruch 1 oder 2,
**dadurch gekennzeichnet, daß** die Zwischenlage (6) vor dem Einbringen der Spots (16) mit passenden Aufnahmeräumen (4) versehen wird.

5. Verfahren nach Anspruch 1 oder 2,
**dadurch gekennzeichnet, daß** als Zwischenlage eine gelochte Folie verwendet wird.

6. Verfahren nach Anspruch 4 oder 5,
**dadurch gekennzeichnet, daß** die Aufnahmeräume (4) mit einem unter Wärmeeinwirkung nicht aufschäumenden Epoxidharz für die Spots (16) aufgefüllt werden.

7. Verfahren nach Anspruch 4 oder 5,
**dadurch gekennzeichnet, daß** die Aufnahmeräume (4) mit einem unter Wärmeeinwirkung aufschäumenden Epoxidharz für die Spots (16) nur teilweise aufgefüllt werden.

8. Verfahren nach Anspruch 1,
**dadurch gekennzeichnet, daß** beim Einbringen der Zwischenlage (26,27) und der Spots (32) zwischen die Deckbleche (20,21) und anschließenden Fügen die Spots (32) aufgrund ihrer höheren Druckfestigkeit durch die Zwischenlage (26,27) bis zur Kontaktierung der Deckbleche (20,21) gedrückt werden.

9. Verfahren nach einem der Ansprüche 1 bis 8,
**dadurch gekennzeichnet, daß** das Erwärmen des Doppellagenbleches auf die niedrigere Temperatur induktiv oder stationär mit einer die Deckbleche (7,10) berührenden Heizpresse (12) oder im Durchlauf mit die Deckbleche(20,21) berührenden, geheizten Rollen (22,23) erfolgt.

10. Tiefziehfähiges Doppellagenblech mit zwei Deckblechen (7,10,20,21) aus Metall und einer zwischen den Deckblechen (7,10,20,21) angeordneten Zwischenlage (6, 26,27) aus Epoxidharz, insbesondere zur Verwendung in einem Verfahren nach Anspruch 2 und insbesondere in Verbindung mit einem der Ansprüche 3 bis 9,
**dadurch gekennzeichnet, daß** in der Zwischenlage (6,22,23) verteilt an den Deckblechen (7,10,20,21) klebende und sie räumlich zueinander fixierende Spots (16,32) eingebettet sind, die aus einem polymerisierten Epoxidharz bestehen, dessen Polymerisationstemperatur unter der Polymerisationstemperatur des Epoxidharzes der Zwischenlage (6,26,27) liegt.

11. Tiefziehfähiges Doppellagenblech nach Anspruch 10,
**dadurch gekennzeichnet, daß** die beiden Deckbleche (7,10,20,21) unterschiedliche Materialstärken, insbesondere Dicken haben.
